Europäisches Patentamt

European Patent Office

Office européen des brevets

(19)

(11) Veröffentlichungsnummer : **0 578 949 B1**

(12) # EUROPÄISCHE PATENTSCHRIFT

(45) Veröffentlichungstag der Patentschrift :
**06.09.95 Patentblatt 95/36**

(51) Int. Cl.$^6$ : **G05D 23/20,** F23N 1/00,
F23N 5/02

(21) Anmeldenummer : **93108151.7**

(22) Anmeldetag : **19.05.93**

(54) **Verfahren und Vorrichtung zum Regeln der Temperatur eines Heizkessels.**

(30) Priorität : **13.07.92 CH 2193/92**

(43) Veröffentlichungstag der Anmeldung :
**19.01.94 Patentblatt 94/03**

(45) Bekanntmachung des Hinweises auf die
Patenterteilung :
**06.09.95 Patentblatt 95/36**

(84) Benannte Vertragsstaaten :
**AT BE CH DE DK FR IT LI SE**

(56) Entgegenhaltungen :
**EP-A- 0 384 959**
**EP-A- 0 412 244**
**GB-A- 2 049 240**
**US-A- 4 901 918**

(73) Patentinhaber : **Landis & Gyr Technology**
**Innovation AG**
**CH-6301 Zug (CH)**

(72) Erfinder : **Zdenek, Kafka**
**Stollbergstrasse 26**
**CH-6003 Luzern (CH)**
Erfinder : **Peter, Ries**
**Pfeffikerstrasse 16**
**CH-5734 Reinach (CH)**

(74) Vertreter : **Müller, Hans-Jürgen, Dipl.-Ing. et al**
**Patentanwälte Dipl.-Ing. Hans-Jürgen Müller,**
**Dipl.-Chem.Dr. Gerhard Schupfner,**
**Dipl.-Ing. Hans-Peter Gauger,**
**Postfach**
**101161**
**D-80085 München (DE)**

## Beschreibung

Die Erfindung bezieht sich auf ein Verfahren zum Regeln der Temperatur eines Heizkessels gemäß dem Oberbegriff des Anspruchs 1 sowie auf einen Regler gemäß dem Oberbegriff des Anspruchs 5.

Solche Verfahren und Regler werden vorteilhaft bei der Regelung von Heizkesseln mit nicht modulierendem Brenner im Zusammenhang mit der Beheizung von Gebäuden angewendet.

Ein Verfahren der im Oberbegriff des Anspruchs 1 genannten Art ist seit langem bekannt und wird beispielsweise von dem in der Druckschrift "Heizungs-Kleinregler RAX2" (PFN-Landis & Gyr GmbH vom November 1963) beschriebenen Heizungsregler verwirklicht. Die Kesselwasser-Solltemperatur wird dabei aus der Außentemperatur abgeleitet. Die wahre Belastung eines Wärmeerzeugers ist aber nicht allein durch die Außentemperatur bestimmt, sondern wird auch dadurch beeinflußt, wieviele Räume beheizt werden sollen und wie weit die Soll-Temperatur der zu beheizenden Räume bereits erreicht worden ist. Trotz niedriger Außentemperatur und daraus abgeleiteter hoher Kesselwasser-Solltemperatur kann es vorkommen, daß die vom Kessel geforderte Last momentan klein ist. Umgekehrt kann auch bei relativ hohen Außentemperaturen eine erhöhte Last auftreten.

Es sind verschiedene Versuche unternommen worden, die Heizleistung eines Brenners der wahren Last anzupassen. So ist aus der EP-A-0 384 959 bekannt, auf einen Außentemperaturfühler ganz zu verzichten und die für den Heizbetrieb geeignete Solltemperatur des Kesselwassers allein aus dem Einschaltverhältnis des Brenners abzuleiten. Aus der EP-A-0 412 244 ist darüber hinaus bekannt, die Einschaltdauer des Brenners und einen festen Ausschaltpunkt vorzugeben und den Einschaltpunkt zu variieren, woraus eine Veränderung der mittleren Kesselwassertemperatur folgt.

Der Erfindung liegt die Aufgabe zugrunde, ein Verfahren und eine Vorrichtung zur Durchführung des Verfahrens zu schaffen, bei dem bzw. der die Kesselvorlauftemperatur möglichst genau an die jeweilige Belastung des Heizkessels angepaßt ist.

Die genannte Aufgabe wird erfindungsgemäß durch die Merkmale der Ansprüche 1 und 5 gelöst. Vorteilhafte Ausgestaltungen ergeben sich aus den abhängigen Ansprüchen.

Nachfolgend wird ein Ausführungsbeispiel der Erfindung anhand der Zeichnung näher erläutert.

Es zeigen:

Fig. 1 ein Schema eines Reglers samt dem zu steuernden Heizkessel,

Fig. 2 ein Diagramm für einen Sollwert der Kesseltemperatur als Funktion der Kesselbelastung und

Fig. 3 ein Diagramm der Kesseltemperatur mit unterer und oberer Begrenzung.

Zuerst wird nachfolgend das erfindungsgemäße Prinzip in der Form eines Regelverfahrens dargestellt.

In Ergänzung zur beim Stand der Technik bekannten Maßnahme, daß aus der Außentemperatur ein Sollwert der Kesseltemperatur in Abhängigkeit von der Außentemperatur variiert wird, wird erfindungsgemäß aus dem Einschaltverhältnis des Brenners ein zweiter Sollwert der Kesseltemperatur abgeleitet. Dieser wird mit dem von der Außentemperatur abhängigen Sollwert der Kesseltemperatur verknüpft, so daß ein dritter Sollwert für die Kesseltemperatur gebildet wird, auf den hin geregelt wird. Bei der Verknüpfung der beiden Sollwerte wird vorteilhaft ein Gewichtungsfaktor berücksichtigt. Durch Veränderung dieses Gewichtungsfaktors kann bestimmt werden, wie groß der Einfluß des aus dem Einschaltverhältnis des Brenners gewonnenen Sollwerts sein soll.

Es ist weiter vorteilhaft, wenn der dritte Sollwert auf einen Höchstwert begrenzt wird. Damit wird erreicht, daß auch bei schnellem Lastwechsel dieser dritte Sollwert nicht auf einen Wert ansteigen kann, daß der bei solchen Kesseln üblicherweise vorhandene Sicherheitstemperaturbegrenzer zum Ansprechen kommt. Vorteilhaft ist es auch, wenn der dritte Sollwert auf einen Mindestwert begrenzt wird. Damit kann ein Kessel, für den die Einhaltung einer bestimmten Mindest-Kesseltemperatur vorgeschrieben ist, vor Korrosion geschützt werden.

Nachfolgend wird ein Regler zur Durchführung des zuvor genannten Verfahrens beschrieben.

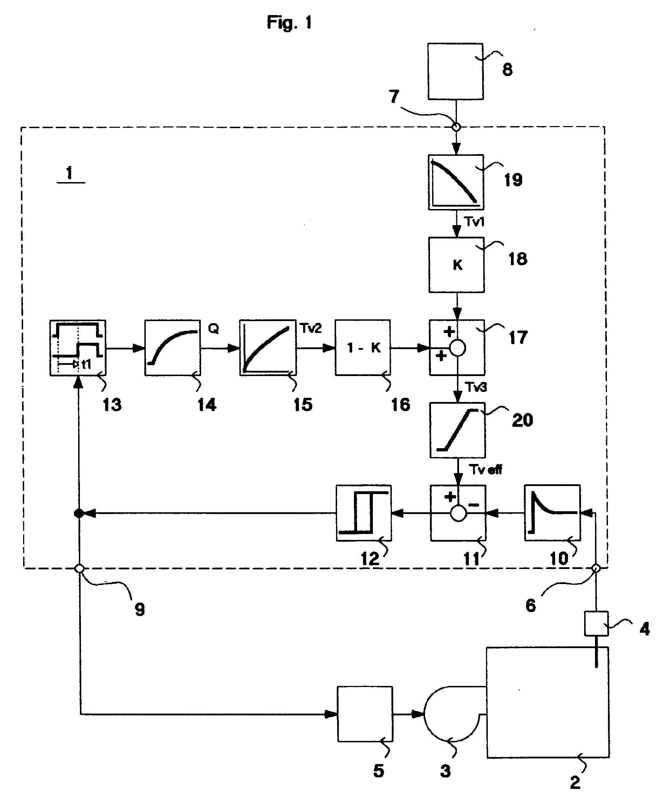

In der Fig. 1 bedeutet 1 einen Regler für einen Heizkessel 2 mit einem Brenner 3 und einem die Temperatur des Wärmeträgermediums im Heizkessel 2 erfassenden Temperaturfühler 4. Der Brenner 3 wird in bekannter Art und Weise von einem Feuerungsautomaten 5 gesteuert. Dieser wird wiederum angesteuert vom Regler 1.

Der Regler 1 besitzt einen ersten Eingang 6 zum Anschluß des Temperaturfühlers 4 des Heizkessels 2, einen zweiten Eingang 7, an den ein Außentemperaturfühler 8 angeschlossen ist, und einen Ausgang 9 zum Anschluß des Feuerungsautomaten 5.

Nachfolgend wird ein Ausführungsbeispiel für den inneren Aufbau des Reglers 1 beschrieben. Der Eingang 6, an den der Temperaturfühler 4 anschließbar ist, ist mit einem Eingang eines Korrekturglieds 10 verbunden, an dessen Ausgang der invertierende Eingang eines Komparators 11 angeschlossen ist. Der Ausgang des Komparators 11 führt zum Eingang eines Zweipunktschalters 12. Dessen Ausgang ist einerseits mit dem Ausgang 9 des Reglers 1 und andererseits mit einem Eingang eines Verzögerungsglieds 13 verbunden. Der Ausgang des Verzögerungsglieds 13 führt zum Eingang eines Rechenglieds 14, dessen Ausgang mit dem Eingang eines ersten Sollwertrechners 15 verbunden ist. Dessen Ausgang ist mit einem Eingang eines ersten Multiplizierers 16 verbunden, dessen Ausgang zum ersten Eingang eines Summierers 17 geführt ist. Am zweiten Eingang des Summierers 17 liegt das Signal eines zweiten Multiplizierers 18 an, dessen Eingang mit dem Ausgang eines zweiten Sollwertrechners 19 verbunden ist. Der Eingang dieses Sollwertrechners 19 ist mit dem Eingang 7 des Reglers 1 verbunden, an den der Außentemperaturfühler 8 anschließbar ist.

Der Ausgang des Summierers 17 ist entweder direkt mit dem nichtinvertierenden Eingang des Komparators 11 verbunden, vorteilhaft ist jedoch zwischen den Ausgang des Summierers 17 und den nichtinvertierenden Eingang des Komparators 11 ein Begrenzer 20 eingefügt.

Nachfolgend wird die Funktionsweise des Reglers 1 beschrieben. Mit dem Temperaturfühler 4 wird die Temperatur des Wärmeträgermediums im Heizkessel 2 erfaßt. Bei Heizungsanlagen ohne Mischventil ist diese Temperatur identisch mit der Heizungsvorlauftemperatur. Das Korrekturglied 10 korrigiert das Signal des Temperaturfühlers 4. Es ist bekannt, daß der Temperaturfühler 4 auf die Änderung der Temperatur verzögert reagiert. Insbesondere bei Heizkesseln 2 mit kleinem Wasserinhalt kann diese Trägheit des Temperaturfühlers 4 zu Problemen führen, indem bei plötzlichem Abschalten der Last die Temperatur überschwingt. Dadurch kann der bei solchen Heizkesseln 2 vorhandene Sicherheitstemperaturbegrenzer ansprechen und die Heizanlage abschalten. Das Korrekturglied 10 ist ein Funktionselement mit Proportional-Differential-Verhalten, dessen Vorhaltezeit auf die Zeitkonstante des Temperaturfühlers 4 abgestimmt ist. Bei Verwendung eines verhältnismäßig schnell reagierenden Temperaturfühlers und bei Kesseln bestimmter Bauart kann auf das Korrekturglied 10 verzichtet werden, so daß in diesem Fall das Signal des Temperaturfühlers 4 direkt dem invertierenden Eingang des Komparators 11 zugeführt wird. In jedem Fall liegt am invertierenden Eingang des Komparators 11 ein die Temperatur im Heizkessel 2 repräsentierendes Signal an.

Am nichtinvertierenden Eingang des Komparators 11 liegt ein Signal an, das dem Sollwert für die Temperatur im Heizkessel 2 entspricht und dessen Zustandekommen später beschrieben wird.

Der Komparator 11 vergleicht die Signale an seinen Eingängen und bildet ein Signal, das der Differenz zwischen diesen beiden Signalen entspricht. Dieses Signal stellt die Sollwertabweichung dar. Der nachgeschaltete Zweipunktschalter 12 bildet daraus einen Befehl für den Brenner 3. Der Befehl lautet "EIN" (Signal = "1"), wenn die Sollwertabweichung positiv und größer als die halbe Schaltdifferenz ist, wenn also der Sollwert um mindestens die halbe Schaltdifferenz größer ist als der Istwert. Er lautet "AUS" (Signal = "0"), wenn die Sollwertabweichung negativ ist, wenn also der Sollwert kleiner als der Istwert ist, wiederum unter Berücksichtigung der Schaltdifferenz. Das Signal des Zweipunktschalters 12 gelangt auf den Eingang des Feuerungsautomaten 5, der den Betrieb des Brenners 3 entsprechend steuert.

Nachfolgend wird die Bildung des Sollwertes für die Temperatur des Heizkessels 2 ausführlich beschrieben. Mit Hilfe des Sollwertrechners 19 wird aus dem Signal des Außentemperaturfühlers 8 ein erster Sollwert $T_{v1}$ gebildet. Dieser erste Sollwert $T_{v1}$ entspricht dem bei außentemperaturgeführten Heizungsanlagen gemäß dem Stand der Technik üblichen Sollwert für die Kesseltemperatur. Dieser Sollwert wird entweder im Gegensatz zu Fig. 1 direkt dem zweiten Eingang des Summierers 17 oder aber vorteilhaft gemäß der Darstellung in der Fig. 1 über den Multiplizierer 18 dem Summierer 17 zugeführt.

Am ersten Eingang des Summierers 17 liegt ein Signal an, das wie nachstehend geschildert aus der Belastung des Heizkessel 2 generiert wird. Das Signal des Zweipunktschalters 12, das zu jedem Zeitpunkt den Schaltzustand "EIN" oder "AUS" des Feuerungsautomaten repräsentiert, gelangt auf den Eingang des Verzögerungsglieds 13. Das Verzögerungsglied 13 verzögert ein an seinem Eingang anliegendes Signal mit positiver Flanke um eine einstellbare Zeit $t_1$, läßt aber ein Signal mit negativer Flanke unverändert. Das bedeutet, daß ein Signalwechsel von "0" zu "1" am Eingang des Verzögerungsglieds 13 um die einstellbare Zeit $t_1$ verzögert zu einem Signalwechsel von "0" zu "1" an seinem Ausgang führt, während ein Signalwechsel von "1" zu "0" am Eingang unmittelbar im selben Moment zu einem Signalwechsel von "1" zu "0" am Ausgang führt. Wenn diese Zeit $t_1$ so eingestellt wird, daß sie gleich groß ist wie die Inbetriebsetzungszeit des Feuerungsautomaten 5, so steht am Ausgang des Verzögerungsglieds 13 ein Signal "0" immer genau so lange an, wie der Brenner 3 ausgeschaltet ist, und ein Signal "1" immer genau so lange, wie der Brenner 3 eingeschaltet ist.

Dadurch wird erreicht, daß am Ausgang des Verzögerungsglieds 13 und somit am Eingang des Rechenglieds 14 anstelle der Einschaltzeit des Feuerungsautomaten 5 annähernd die wirkliche Einschaltzeit des Brenners 3 anliegt.

Es wäre natürlich auch möglich, vom Brenner 3 ein die wirkliche Brennerlaufzeit repräsentierendes Signal, beispielsweise ein Einschaltsignal für die Ölförderpumpe, direkt auf den Eingang des Rechenglieds 14 zu speisen. Dadurch könnte zwar das Verzögerungsglied 13 entfallen, jedoch würde eine zusätzliche Leitungsverbindung zwischen Brenner 3 und Rechenglied 14 nötig. Dies kann ein Nachteil sein, wenn die Leitungsführung möglichst einfach gehalten werden soll.

Das Rechenglied 14 nimmt eine Zeitmittelung vor, die beispielsweise durch Verwendung eines Tiefpaßfilters exponentiell sein kann. Durch die Zeitmittelung wird ein Signal erzeugt, das dem Einschaltverhältnis des Brenners 3 in einer zurückliegenden Zeitperiode entspricht. Die Größe des Einschaltverhältnisses des Brenners 3 erlaubt eine Aussage über die tatsächliche Belastung des Heizkessels 2: Ist das Einschaltverhältnis klein, beispielsweise 0,2, so besagt dies, daß der Heizkessel 2 jeweils nur kurze Zeit in Betrieb ist, um die geforderte tatsächliche Heizleistung aufzubringen. Ist es groß, beispielsweise annähernd 1,0, so besagt dies, daß der Heizkessel 2 beinahe unter Vollast läuft.

Das Rechenglied 14 kann vorteilhaft als Verzögerungsglied erster Ordnung ausgebildet sein, wobei die Zeitkonstante etwa eine Stunde beträgt. Auf diese Weise steht am Ausgang des Rechenglieds 14 ein Signal an, daß der Kesselbelastung Q und damit dem Wärmebedarf entspricht.

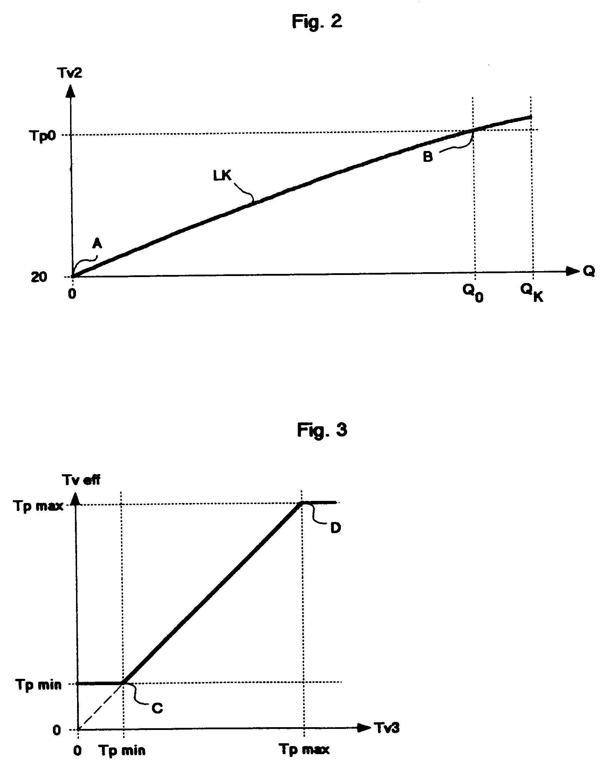

Erfindungsgemäß wird nun aus der mit dem Einschaltverhältnis des Brenners 3 korrelierten Kesselbelastung Q ein zweiter Sollwert der Kesseltemperatur abgeleitet. Dies geschieht mit Hilfe des Sollwertrechners 15. Der Funktionszusammenhang zwischen der Kesselbelastung Q und dem zweiten Sollwert $T_{v2}$ der Kesseltemperatur ist in der Fig. 2 wiedergegeben. Auf der Abszissenachse ist die Kesselbelastung Q auftragen. Der Abszissenwert $Q_k$ repräsentiert die Kesselnennleistung und der Abszissenwert $Q_o$ den Norm-Wärmebedarf der Heizungsanlage. Auf der Ordinatenachse ist der Sollwert $T_{v2}$ aufgetragen. Die Leistung $Q_o$ und die Temperatur $T_{po}$ sind die Auslegungsdaten der Heizungsanlage. Diesen Daten entspricht der Punkt B. Zwischen dem als Punkt A bezeichneten Ursprung des Koordinatensystems bei beispielsweise 20 Grad Celsius und Kesselbelastung Null und dem Punkt B verläuft eine Lastkurve LK mit einer der Bauart der Heizungsanlage angepaßten Krümmung.

Die beiden Sollwerte $T_{v1}$ und $T_{v2}$ werden nun miteinander verknüpft, so daß ein dritter Sollwert $T_{v3}$ gebildet wird, der direkt dem nichtinvertierenden Eingang des Komparators 11 (Fig. 1) zugeführt werden kann. Die Verknüpfung kann in einfachster Weise durch Mittelwertbildung geschehen. In diesem Fall wird der Heizkessel 2 gemäß dem Mittelwert aus den beiden Sollwerten $T_{v1}$ und $T_{v2}$ geführt.

Vorteilhaft ist es, wenn bei der Verknüpfung der beiden Sollwerte $T_{v1}$ und $T_{v2}$ ein Gewichtungsfaktor berücksichtigt wird. Dies kann gemäß der Fig. 1 vorteilhaft dadurch geschehen, daß der erste Sollwert $T_{V1}$ im Multiplizierer 18 mit einem Multiplikator K multipliziert wird, während der zweite Sollwert $T_{v2}$ im Multiplizierer 16 mit einem Multiplikator 1-K multipliziert wird.

Im Summierer 17 werden die beiden gewichteten Sollwerte, nämlich $T_{v2} \cdot (1-K)$ einerseits und $T_{v1} \cdot K$ andererseits, addiert. Dieses Summensignal ist der dritte Sollwert $T_{v3}$, der folgender Formel entspricht:

$$T_{v3} = T_{v2} \cdot (1 - K) + T_{v1} \cdot K$$

Umgeformt ergibt das:

$$T_{v3} = T_{v2} - K \cdot (T_{v2} - T_{v1})$$

Gemäß dieser Beziehung ist es vorteilhaft, die beiden Multiplizierer 16 und 18 mit dem Summierer 17 zu einem einzigen Element zusammenzufassen.

Der dritte Sollwert $T_{v3}$ kann im Gegensatz zur Fig. 1 direkt dem nichtinvertierenden Eingang des Komparators 11 zugeführt werden.

Der Multiplikator K bestimmt den Einfluß der Außentemperatur und den Einfluß der Kesselbelastung bzw. des Wärmebedarfs auf den dritten Sollwert $T_{v3}$ als maßgebliche Führungsgröße für den Heizkessel 2. Hat der Multiplikator K den Wert "1", dann ist der Sollwert $T_{v3}$ identisch mit dem Sollwert $T_{v1}$ und infolgedessen ist die Führungsgröße für den Heizkessel 2 allein von der Außentemperatur abhängig. Besitzt der Multiplikator K den Wert "0", dann ist der Sollwert $T_{v3}$ identisch mit dem Sollwert $T_{v2}$ und infolgedessen ist die Führungsgröße für den Heizkessel 2 allein von der Kesselbelastung abhängig. Ist der Wert des Multiplikators K größer als "0" und kleiner als "1", so wird der dritte Sollwert $T_{v3}$ sowohl von der Außentemperatur als auch von der Kesselbelastung bestimmt. Mit abnehmendem Wert des Multiplikators K sinkt der Einfluß der Außentemperatur und der Einfluß der Kesselbelastung steigt.

Bei fest eingestelltem Multiplikator K in der Größe von etwa 0,5 ist es beispielsweise möglich, daß in dem Fall, da der Benützer mehrere Räume gar nicht beheizt, der Wärmebedarf insgesamt klein ist und die daraus resultierende niedrige Kesseltemperatur für eine ausreichende Beheizung eines einzelnen Raumes nicht ausreicht. Auch der umgekehrte Fall ist denkbar. Deshalb sollte der Benützer in der Lage sein, den Zusammenhang zwischen augenblicklicher Kesselbelastung bzw. Wärmebedarf und der Solltemperatur des Heizkessels 2 zu verändern. Dies geschieht zweckmäßigerweise durch Veränderung des Multiplikators K. Der Multiplikator K ist also die dem Benützer zugängliche Korrekturmöglichkeit, so daß es vorteilhaft ist, wenn der Regler 1 die Möglichkeit bietet, den Multiplikator K durch den Benützer einzustellen und zu verändern.

Es war schon bei der Beschreibung des Verfahrens erwähnt worden, daß es vorteilhaft ist, wenn der dritte Sollwert $T_{v3}$ begrenzt wird. Dies ermöglicht der Begrenzer 20. In der Fig. 3 ist ein vorteilhafter Zusammenhang zwischen dem dritten Sollwert $T_{v3}$ und dem Ausgangssignal des Begrenzers 20, das hier als Sollwert $T_{veff}$ bezeichnet wird, dargestellt. Auf der Abszissenachse ist der dritte Sollwert $T_{v3}$ aufgetragen, auf der Ordinatenachse der resultierende Sollwert $T_{veff}$. Um Abgaskondensation bei Kesseln entsprechender Bauart zu vermei-

4

den, wird von den Kesselherstellern gefordert, daß die Temperatur im Heizkessel 2 den Wert $T_{pmin}$ nicht unterschreitet. Aus diesem Grund ist der Begrenzer 20 so ausgelegt, daß der resultierende Sollwert $T_{veff}$ mindestens den Wert $T_{pmin}$ annimmt. Um zu verhindern, daß bei plötzlicher Lastabschaltung der Sicherheitstemperaturbegrenzer anspricht, ist der Begrenzer 20 so ausgelegt, daß der resultierende Sollwert $T_{veff}$ höchtens den Wert $T_{pmax}$ annimmt. Zwischen den durch die Schnittpunkte der Werte $T_{pmin}$ bzw. $T_{pmax}$ auf beiden Achsen gebildeten Punkten C und D ist der resultierende Sollwert $T_{veff}$ mit dem dritten Sollwert $T_{v3}$ identisch.

Der Regler 1 kann statt als analoger Regler gemäß den Varianten des vorgenannten Ausführungsbeispiels auch als digitaler Regler verwirklicht werden, bei dem die Funktionen der einzelnen Elemente wie Korrekturglied 10, Komparator 11 usw. durch entsprechende Regelalgorithmen realisiert sind.

Mit dem vorgenannten Regler 1 bzw. dem in diesem verwirklichten Regelverfahren gelingt es, die starre Kopplung der Kesseltemperatur an die Außentemperatur, wie sie beim Stand der Technik über einen langen Zeitraum üblich war, zu verlassen und mittels einer Anpassung an den tatsächlichen Wärmebedarf zu ergänzen. Da sich der Regler 1 automatisch an den tatsächlichen Wärmebedarf anpaßt, ist es durchaus möglich, auf andere, teils sehr komplizierte Adaptions-Algorithmen zu verzichten.

Auch in analoger Technik sind weitere Ausführungsformen im Rahmen der Erfindung möglich. Beispielsweise ist es möglich, vom Sollwertrechner 15 statt eines zweiten Sollwerts $T_{v2}$ eine Sollwert-Korrektur berechnen zu lassen, die positiv oder negativ sein kann und mit entsprechender Gewichtung zum ersten Sollwert $T_{v1}$ addiert wird.

Wesentlich an der Erfindung ist, daß Glieder vorhanden sind bzw. Verfahrensschritte ausgeführt werden, mit deren Hilfe aus dem Einschaltverhältnis des Heizkessels 2 ein Korrektursignal für den ersten Sollwert $T_{v1}$ gewonnen und mit diesem Sollwert verknüpft wird.

## Patentansprüche

1. Verfahren zum Regeln der Temperatur eines mit einem nicht modulierenden Brenner (3) beheizten Heizkessels (2), bei dem der Sollwert der Kesseltemperatur in Abhängigkeit von der Außentemperatur variiert wird,
dadurch gekennzeichnet, daß aus dem Einschaltverhältnis des Brenners (3) ein zweiter Sollwert $T_{v2}$ der Kesseltemperatur abgeleitet wird, der mit dem von der Außentemperatur abhängigen Sollwert $T_{v1}$ der Kesseltemperatur verknüpft wird, so daß ein dritter Sollwert $T_{v3}$ für die Kesseltemperatur gebildet wird, auf den hin geregelt wird.

2. Verfahren nach Anspruch 1, dadurch gekennzeichnet, daß bei der Verknüpfung des von der Außentemperatur abhängigen Sollwerts $T_{v1}$ mit dem zweiten Sollwert $T_{v2}$ ein Gewichtungsfaktor berücksichtigt wird.

3. Verfahren nach Anspruch 1 oder 2, dadurch gekennzeichnet, daß der dritte Sollwert $T_{v3}$ auf einen Höchstwert ($T_{pmax}$) begrenzt wird.

4. Verfahren nach einem der Ansprüche 1 bis 3, dadurch gekennzeichnet, daß der dritte Sollwert $T_{v3}$ auf einen Mindestwert ($T_{pmin}$) begrenzt wird.

5. Regler zum Regeln der Temperatur eines mit einem nicht modulierenden Brenner (3) beheizten Heizkessels (2) mit einem Sollwertrechner (19) für die Kesseltemperatur, wobei der Sollwert der Kesseltemperatur eine Funktion der mittels eines Außentemperaturfühlers (8) gemessen Außentemperatur ist, und mit einem Anschluß für einen Istwertfühler (4) für die Kesseltemperatur, mit einem Komparator (11) für Soll- und Istwert und einem den Brenner (3) des Heizkessels (2) steuernden Zweipunktschalter (12), dadurch gekennzeichnet, daß Glieder (14, 15) vorhanden sind, die aus dem Einschaltverhältnis des Brenners (3) ein Korrektursignal ($T_{v2}$) gewinnen, das einem Eingang eines Summierers (17) zugeführt ist, dessen anderer Eingang mit dem Ausgang des Sollwertrechners (19) verbunden ist, wobei der dem komparator (11) zugeführte sollwert dem Einschaltverhältnis des Brenners angepasst wird.

6. Regler nach Anspruch 5, dadurch gekennzeichnet, daß der Ausgang des Zweipunktschalters (12) mit dem Eingang eines Rechenglieds (14) verbunden ist, das ein Signal erzeugt, das dem Einschaltverhältnis des Brenners (3) entspricht, und daß der Ausgang des Rechenglieds (14) mit einem Eingang eines zweiten Sollwertrechners (15) verbunden ist, an dessen Ausgang ein aus dem Einschaltverhältnis des Brenners (3) abgeleiteter zweiter Sollwert $T_{v2}$ der Kesseltemperatur ansteht.

**7.** Regler nach Anspruch 6, dadurch gekennzeichnet, daß zwischen den Ausgängen der Sollwertrechner (15, 19) und den Eingängen des Summierers (17) Multiplizierer (16, 18) geschaltet sind, mit denen die Signale der Sollwerte $T_{v1}$ und $T_{v2}$ gewichtet werden.

**8.** Regler nach Anspruch 7, dadurch gekennzeichnet, daß das Ausgangssignal des Summierers (17) bzw. eines durch Zusammenfassung von Multiplizierern (16, 18) und Summierer (17) gebildeten Elements einen dritten Sollwert $T_{v3}$ darstellt, der der Formel

$$T_{v3} = T_{v2} - K \cdot (T_{v2} - T_{v1})$$

gehorcht, wobei K ein die Gewichtung realisierender Multiplikator ist.

**9.** Regler nach Anspruch 8, dadurch gekennzeichnet, daß Mittel vorhanden sind, mit deren Hilfe der Multiplikator K veränderbar ist.

**10.** Regler nach Anspruch 8 oder 9, dadurch gekennzeichnet, daß dem Ausgang des Summierers (17) ein Begrenzer (20) nachgeschaltet ist.

## Claims

**1.** A method of regulating the temperature of a boiler (2) which is heated with a non-modulating burner (3), wherein the reference value of the boiler temperature is varied in dependence on the outside temperature, characterised in that a second reference value $T_{v2}$ of the boiler temperature is derived from the switch-on ratio of the burner (3), and is linked to the reference value $T_{v1}$ of the boiler temperature, which is dependent on the outside temperature, so that a third reference value $T_{v3}$ is formed for the boiler temperature, to which the temperature is regulated.

**2.** A method according to claim 1 characterised in that a weighting factor is taken into consideration in linking the reference value $T_{v1}$ which is dependent on the outside temperature to the second reference value $T_{v2}$.

**3.** A method according to claim 1 or claim 2 characterised in that the third reference value $T_{v3}$ is limited to a maximum value ($T_{pmax}$).

**4.** A method according to one of claims 1 to 3 characterised in that the third reference value $T_{v3}$ is limited to a minimum value ($T_{pmin}$).

**5.** A regulator for regulating the temperature of a boiler (2) which is heated with a non-modulating burner (3), comprising a reference value calculating means (19) for the boiler temperature, the reference value of the boiler temperature being a function of the outside temperature measured by means of an outside temperature sensor (8), and a connection for an actual value sensor (4) for the boiler temperature, a comparator (11) for the reference and the actual values, and a two-position switch (12) for controlling the burner (3) of the boiler (2), characterised in that there are provided members (14, 15) which produce from the switch-on ratio of the burner (3) a correction signal ($T_{v2}$) which is fed to an input of a summing means (17) whose other input is connected to the output of the reference value calculating means (19), wherein the reference value which is fed to the comparator (11) is adapted to the switch-on ratio of the burner.

**6.** A regulator according to claim 5 characterised in that the output of the two-position switch (12) is connected to the input of a calculating member (14) which produces a signal corresponding to the switch-on ratio of the burner (3), and that the output of the calculating member (14) is connected to an input of a second reference value calculating means (15), at whose output there is a second reference value $T_{v2}$ of the boiler temperature, said second reference value being derived from the switch-on ratio of the burner (3).

**7.** A regulating according to claim 6 characterised in that multipliers (16, 18) for weighting the signals of the reference values $T_{v1}$ and $T_{v2}$ are connected between the outputs of the reference value calculating means (15, 19) and the inputs of the summing means (17).

**8.** A regulating according to claim 7 characterised in that the output signal of the summing means (17) or an element formed by combining multipliers (16, 18) and summing means (17) represents a third reference

value $T_{v3}$ which complies with the formula:

$$T_{v3} = T_{v2} - K \cdot (T_{v2} - T_{v1})$$

wherein K is a multiplier producing the weighting effect.

9. A regulator according to claim 8 characterised in that there are provided means for varying the multiplier K.

10. A regulator according to claim 8 or claim 9 characterised in that a limiting means (20) is connected downstream of the output of the summing means (17).

**Revendications**

1. Procédé de régulation de la température d'une chaudière de chauffage (2) chauffée par un brûleur (3) sans modulation, suivant lequel la consigne de la température de la chaudière subit une variation en fonction de la température extérieure,
caractérisé en ce qu'une deuxième consigne Tv2 de la température de la chaudière est déduite du taux de mise en circuit du brûleur (3) et combinée avec la consigne Tv1 de la température de la chaudière, qui est fonction de la température extérieure, de manière à former une troisième consigne Tv3 de la température de la chaudière sur la base de laquelle la régulation est effectuée.

2. Procédé selon la revendication 1, caractérisé en ce qu'un facteur de pondération est pris en considération pour la combinaison de la consigne Tv1, qui est fonction de la température extérieure, avec la deuxième consigne Tv2.

3. Procédé selon la revendication 1 ou 2, caractérisé en ce que la troisième consigne Tv3 est limitée à un maximum (Tpmax).

4. Procédé selon l'une des revendications 1 à 3, caractérisé en ce que la troisième consigne Tv3 est limitée à un minimum (Tpmin).

5. Régulateur destiné à la régulation de la température d'une chaudière de chauffage (2) chauffée par un brûleur (3) sans modulation, comprenant un calculateur (19) de la consigne de la température de la chaudière, la consigne de la température de la chaudière étant une fonction de la température extérieure mesurée par un capteur (8) de la température extérieure, ainsi qu'une connexion à un capteur (4) de la valeur réelle de la température de la chaudière, régulateur comprenant par ailleurs un comparateur (11) de la consigne et de la valeur réelle ainsi qu'un commutateur (12) à deux positions de commande du brûleur (3) de la chaudière de chauffage (2), caractérisé en ce qu'il comprend des éléments (14, 15) qui obtiennent du taux de mise en circuit du brûleur (3) un signal de correction (Tv2) qui est envoyé à une entrée d'un additionneur (17) dont l'autre entrée est connectée à la sortie du calculateur (19) de consigne, la consigne envoyée au comparateur (11) étant adaptée au taux de mise en circuit du brûleur.

6. Régulateur selon la revendication 5, caractérisé en ce que la sortie du commutateur (12) à deux positions est connectée à l'entrée d'un élément de calcul (14) qui génère un signal qui correspond au taux de mise en circuit du brûleur (3) et en ce que la sortie de l'élément de calcul (14) est connectée à une entrée d'un second calculateur de consigne (15) à la sortie duquel apparaît une seconde consigne Tv2 de la température de la chaudière qui est déduite du taux de mise en circuit du brûleur (3).

7. Régulateur selon la revendication 6, caractérisé en ce que des multiplieurs (16, 18), à l'aide desquels les signaux des consignes Tv1 et Tv2 sont pondérés, sont branchés aux sorties des calculateurs (15, 19) de valeur de consigne et aux entrées de l'additionneur (17)

8. Régulateur selon la revendication 7, caractérisé en ce que le signal de sortie de l'additionneur (17) ou d'un élément formé de la réunion des multiplieurs (16, 18) et de l'additionneur (17) représente une troisième consigne Tv3 qui obéit à la formule

$$Tv3 = Tv2 - K \cdot (Tv2 - Tv1)$$

K étant un multiplicateur qui réalise la pondération.

9.  Régulateur selon la revendication 8, caractérisé en ce qu'il comprend des moyens à l'aide desquels le multiplicateur K peut être modifié.

10.  Régulateur selon la revendication 8 ou 9, caractérisé en ce qu'un limiteur (20) est monté en aval de l'additionneur (17).

Fig. 1

## Fig. 2

## Fig. 3